# EUROPEAN PATENT APPLICATION

(11) **EP 4 525 194 A1**
(43) Date of publication of application: **19.03.2025**
(21) Application number: 22941414.9
(22) Date of filing: 05.09.2022
(51) Int. Cl.: H01M 50/533, H01M 10/0569, H01M 10/0525, H01M 10/058

(54) **ELECTROCHEMICAL APPARATUS AND ELECTRONIC APPARATUS**

(30) Priority: 11.05.2022 CN 202210506822
(71) Applicant: Ningde Amperex Technology Limited, Ningde, Fujian 352100 (CN)
(72) Inventor: XU, Chunrui, Ningde, Fujian 352100 (CN)
(74) Representative: Klunker IP Patentanwälte PartG mbB
(86) International application number: PCT/CN2022/117005
(87) International publication number: WO 2023/216473

(57) **Abstract**

This application provides an electrochemical apparatus and an electronic apparatus. The electrochemical apparatus includes a positive electrode plate and an electrolyte, where the positive electrode plate includes a positive tab, and a working length b of the positive tab is 0.5 m to 3 m; the electrolyte includes cyclic carbonate, where a mass percentage of the cyclic carbonate is a% based on a mass of the electrolyte, and the cyclic carbonate includes ethylene carbonate and/or propylene carbonate; and the electrochemical apparatus satisfies 13≤a/b≤110. Values of the working length b of the positive tab and a/b being controlled within the foregoing ranges and selection of the foregoing cyclic carbonate are conducive to forming a synergistic effect between the positive electrode plate and the electrolyte, so as to improve cycling performance, high-temperature performance, safety performance, and the like of the electrochemical apparatus without affecting kinetic performance of the electrochemical apparatus, thereby improving comprehensive performance of the electrochemical apparatus.

## Description

This application claims priority to Chinese Patent Application No. 202210506822.1, filed with the China National Intellectual Property Administration on May 11, 2022 and entitled "ELECTROCHEMICAL APPARATUS AND ELECTRONIC APPARATUS", which is incorporated herein by reference in its entirety.

### TECHNICAL FIELD

This application relates to the field of electrochemical technologies, and in particular, to an electrochemical apparatus and an electronic apparatus.

### BACKGROUND

With advantages such as high energy storage density, high open-circuit voltage, low self-discharge rate, long cycle life, and high safety, lithium-ion batteries are widely used in the fields such as portable electric energy storage, electronic devices, and electric vehicles, and have gradually become mainstream batteries in these fields. During rapid development of lithium-ion batteries, higher requirements are imposed on comprehensive performance of the lithium-ion batteries. For example, how cycling performance, high-temperature performance, and safety performance of the lithium-ion batteries are improved while higher energy density and lower costs of the lithium-ion batteries are ensured. Therefore, how the comprehensive performance of the lithium-ion batteries is improved is an urgent problem that needs to be solved.

### SUMMARY

This application is intended to provide an electrochemical apparatus and an electronic apparatus so as to improve comprehensive performance of the electrochemical apparatus.

A first aspect of this application provides an electrochemical apparatus. The electrochemical apparatus includes a positive electrode plate and an electrolyte, where the positive electrode plate includes a positive tab, and a working length b of the positive tab is 0.5 m to 3 m; the electrolyte includes cyclic carbonate, where a mass percentage of the cyclic carbonate is a% based on a mass of the electrolyte, and the cyclic carbonate includes ethylene carbonate and/or propylene carbonate; and the electrochemical apparatus satisfies 13≤a/b≤110, and preferably 20≤a/b≤110. Values of the working length b of the positive tab and a/b being controlled within the foregoing ranges and selection of the foregoing cyclic carbonate are conducive to forming a synergistic effect between the positive electrode plate and the electrolyte, so as to improve cycling performance, high-temperature performance, safety performance, and the like of the electrochemical apparatus without affecting kinetic performance of the electrochemical apparatus, thereby improving comprehensive performance of the electrochemical apparatus.

In a length direction of the positive electrode plate, the positive electrode plate includes a first edge and a second edge opposite each other; and the positive tab is provided in a quantity of one, where distance between the positive tab and the first edge is L1, distance between the positive tab and the second edge is L2, and the working length b is equal to the greater one of L1 and L2; or the positive tab is provided in a quantity of two, where the positive tab close to the first edge is a first positive tab, the positive tab close to the second edge is a second positive tab, distance between the first positive tab and the first edge is L3, distance between the second positive tab and the second edge is L4, distance between the first positive tab and the second positive tab is L5, and the working length b is equal to the greatest one of L3, L4, and 0.5×L5.

In some embodiments of this application, 25≤a≤60, and 14.5≤a/b≤110. Values of a and a/b being controlled within the foregoing ranges can improve the safety performance of the electrochemical apparatus without affecting the kinetic performance of the electrochemical apparatus, thereby improving the comprehensive performance of the electrochemical apparatus.

In some embodiments of this application, the positive electrode plate includes a positive electrode current collector and a positive electrode material layer provided on at least one surface of the positive electrode current collector, a coating mass of the positive electrode material layer is C g/1540.25 mm², and the electrochemical apparatus satisfies 50≤a/C≤300. A value of ≤a/C being controlled within the foregoing range can improve the cycling performance, high-temperature performance, and safety performance of the electrochemical apparatus without affecting the kinetic performance and energy density of the electrochemical apparatus, thereby improving the comprehensive performance of the electrochemical apparatus.

In some embodiments of this application, 0.2≤C≤0.5. A value of C being controlled within the foregoing range can improve the safety performance of the electrochemical apparatus without affecting the energy density of the electrochemical apparatus, thereby improving the comprehensive performance of the electrochemical apparatus.

In some embodiments of this application, the electrolyte includes a polynitrile compound, a mass percentage d% of the polynitrile compound is 0.5% to 5% based on the mass of the electrolyte, and the polynitrile compound includes at least one of glutaronitrile, adiponitrile, succinonitrile, butenenitrile, 3-methyl butene nitrile, 1,2-bis(cyanoethoxy)ethane, 1,3,5-hexanetricarbonitrile, 1,3,6-hexanetricarbonitrile, 1,2,3-tris(2-cyanoethoxy)propane, or 1,3,4,6-hexanetetracarbonitrile. Preferably, the electrolyte includes at least one of glutaronitrile, adiponitrile, succinonitrile, or 1,2-bis(cyanoethoxy)ethane; and at least one of 1,3,5-hexanetricarbonitrile, 1,3,6-hexanetricarbonitrile, 1,2,3-tris(2-cyanoethoxy)propane, or 1,3,4,6-hexanetetracarbonitrile. The mass percentage of the polynitrile compound being controlled within the foregoing range is conducive to improving the safety performance and cycling performance of the electrochemical apparatus without affecting the kinetic performance of the electrochemical apparatus. Selection of the foregoing polynitrile compound can improve the cycling performance, high-temperature performance, safety performance, and the like of the electrochemical apparatus, thereby improving the comprehensive performance of the electrochemical apparatus.

In some embodiments of this application, the positive electrode plate includes a positive electrode active material, and a Dᵥ10 of the positive electrode active material and the mass percentage d% of the polynitrile compound numerically satisfy: 0.2≤d/Dᵥ10≤4; and 1 µm≤Dᵥ10≤5 µm. A value of d/Dᵥ10 being controlled within the foregoing range is conducive to improving the cycling performance, high-temperature performance, safety performance, and the like of the electrochemical apparatus, thereby improving the comprehensive performance of the electrochemical apparatus.

In some embodiments of this application, the electrolyte includes a sulfur-oxygen double bond-containing compound, a mass percentage of the sulfur-oxygen double bond-containing compound is 0.01% to 8% based on the mass of the electrolyte, and the sulfur-oxygen double bond-containing compound includes at least one of 1,3-propane sultone, ethylene sulfate, methylene methanedisulfonate, propenyl-1,3-sultone, tetrafluoroethane-beta-sultone, 2,4-butanesultone, 1,4-butanesultone, 1,8-naphthosultone, or ethylene sulfite. The mass percentage of the sulfur-oxygen double bond-containing compound being controlled within the foregoing range is conducive to improving the safety performance and cycling performance of the electrochemical apparatus without affecting the kinetic performance of the electrochemical apparatus. Selection of the foregoing sulfur-oxygen double bond-containing compound can improve the cycling performance, high-temperature performance, safety performance, and the like of the electrochemical apparatus, thereby improving the comprehensive performance of the electrochemical apparatus.

In some embodiments of this application, the electrolyte includes a lithium salt additive, a mass percentage e% of the lithium salt additive is 0.01% to 2% based on the mass of the electrolyte, and the lithium salt additive includes at least one of lithium difluorophosphate, lithium difluorooxalatoborate, lithium bisoxalatoborate, lithium tetrafluoroborate, lithium tetraborate, lithium borate, or lithium trifluoromethanesulfonate. The mass percentage of the lithium salt additive being controlled within the foregoing range is conducive to improving the safety performance and cycling performance of the electrochemical apparatus without affecting the kinetic performance of the electrochemical apparatus. Selection of the foregoing lithium salt additive can improve the cycling performance, high-temperature performance, safety performance, and the like of the electrochemical apparatus, thereby improving the comprehensive performance of the electrochemical apparatus. In some embodiments of this application, the positive electrode plate includes the positive electrode material layer, the positive electrode active material in the positive electrode material layer includes element A, a mass percentage of element A is 0.001% to 2% based on a mass of the positive electrode active material, and element A includes at least one of Al, B, Cr, Fe, Mg, Na, S, Ti, Zr, Y, Nb, Mo, W, F, or P, which can improve the cycling performance, high-temperature performance, safety performance, and the like of the electrochemical apparatus, thereby improving the comprehensive performance of the electrochemical apparatus.

A second aspect of this application provides an electronic apparatus, including the electrochemical apparatus according to any one of the foregoing embodiments. The electrochemical apparatus provided in this application has good comprehensive performance, and the electronic apparatus obtained has longer service life.

This application provides an electrochemical apparatus and an electronic apparatus. The electrochemical apparatus includes a positive electrode plate and an electrolyte, where the positive electrode plate includes a positive tab, and a working length b of the positive tab is 0.5 m to 3 m; the electrolyte includes cyclic carbonate, where a mass percentage of the cyclic carbonate is a% based on a mass of the electrolyte, and the cyclic carbonate includes ethylene carbonate and/or propylene carbonate; and the electrochemical apparatus satisfies 13≤a/b≤110. Values of the working length b of the positive tab and a/b being controlled within the foregoing ranges and selection of the foregoing cyclic carbonate are conducive to forming a synergistic effect between the positive electrode plate and the electrolyte, so as to improve cycling performance, high-temperature performance, safety performance, and the like of the electrochemical apparatus without affecting kinetic performance of the electrochemical apparatus, thereby improving comprehensive performance of the electrochemical apparatus.

Certainly, implementing any embodiment of this application does not necessarily require all the advantages described above.

### BRIEF DESCRIPTION OF DRAWINGS

To describe the technical solutions in embodiments of this application and in the prior art more clearly, the following briefly describes the accompanying drawings required for describing the embodiments and the prior art. Apparently, the accompanying drawings in the following description show merely some of the embodiments of this application, and a person of ordinary skill in the art may still derive other drawings from these accompanying drawings without creative efforts.
FIG. 1 is a schematic structural diagram of a positive electrode plate according to some embodiments of this application; and
FIG. 2 is a schematic structural diagram of a positive electrode plate according to some other embodiments of this application.

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by a person of ordinary skill in the art based on the embodiments of this application without creative efforts shall fall within the protection scope of this application.

It should be noted that, in the specific embodiments of this application, an example in which a lithium-ion battery is used as an electrochemical apparatus is used to illustrate this application. However, the electrochemical apparatus in this application is not limited to the lithium-ion battery.

Generally, a lithium-ion battery includes a positive electrode plate, a negative electrode plate, a separator, an electrolyte, and the like, which are all important factors affecting performance of the lithium-ion battery. For a lithium-ion battery with a winding structure, a length-width ratio of its positive electrode plate and negative electrode plate is relatively large. When relatively few positive tabs are provided on the positive electrode plate (for example, one or two positive tabs are provided), uniformity of current density and temperature distribution in different regions of the positive electrode plate is affected, thereby affecting comprehensive performance, such as cycling performance, high-temperature performance, and safety performance of the lithium-ion battery. In view of the foregoing problem, this application provides an electrochemical apparatus and an electronic apparatus, so as to improve comprehensive performance of the electrochemical apparatus.

A first aspect of this application provides an electrochemical apparatus. The electrochemical apparatus includes a positive electrode plate and an electrolyte, where the positive electrode plate includes a positive tab, and a working length b of the positive tab is 0.5 m to 3 m; the electrolyte includes cyclic carbonate, where a mass percentage of the cyclic carbonate is a% based on a mass of the electrolyte, and the cyclic carbonate includes ethylene carbonate (EC) and/or propylene carbonate (PC); and the electrochemical apparatus satisfies 13≤a/b≤110, and preferably 20≤a/b≤110.

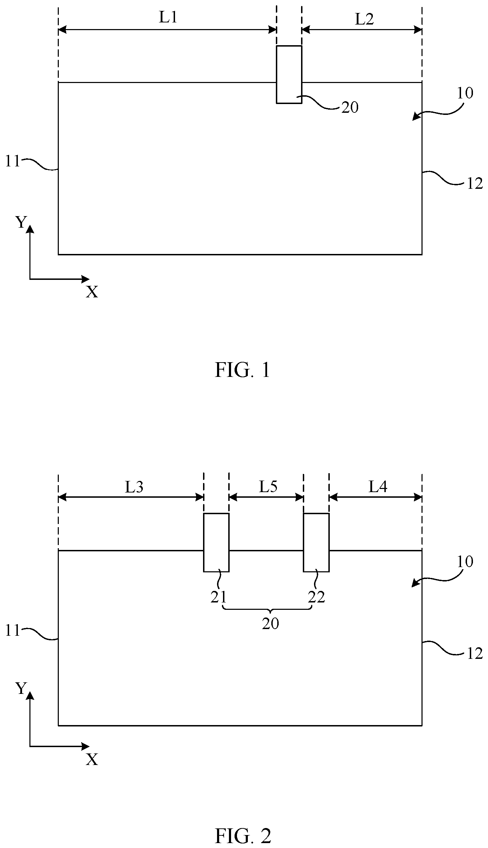

For ease of understanding, a rectangular coordinate system is established with a length direction of the positive electrode plate as a direction X and a width direction of the positive electrode plate as a direction Y. As shown in FIG. 1 and FIG. 2, in the length direction (direction X) of the positive electrode plate 10, the positive electrode plate 10 includes a first edge 11 and a second edge 12 opposite each other. Specifically, as shown in FIG. 1, when one positive tab 20 of the positive electrode plate 10 is provided, distance between the positive tab 20 and the first edge 11 is L1, distance between the positive tab 20 and the second edge 12 is L2, and the working length b of the positive tab is equal to the greater one of L1 and L2. Alternatively, as shown in FIG. 2, when two positive tabs 20 of the positive electrode plate 10 are provided, the positive tab 20 close to the first edge 11 is a first positive tab 21, the positive tab 20 close to the second edge 12 is a second positive tab 22, distance between the first positive tab 21 and the first edge 11 is L3, distance between the second positive tab 22 and the second edge 12 is L4, distance between the first positive tab 21 and the second positive tab 22 is L5, and the working length b of the positive tab is equal to the greatest one of L3, L4, and 0.5×L5.

The applicant of this application has found that an excessively small value of a/b (for example, less than 13) or an excessively large working length b of the positive tab (for example, greater than 3 m) leads to uneven current density and heat on the positive electrode plate, and a region close to the positive tab has higher current density, more heat accumulated, and higher temperature, leading to an increased delithiation amount. This is likely to cause lithium precipitation on a negative electrode plate and aggravated structure decay of a positive electrode active material of the positive electrode plate, thereby aggravating side reactions between the positive electrode active material and the electrolyte, affecting cycling performance and safety performance of the electrochemical apparatus, and even leading to failure of the electrochemical apparatus. An excessively large value of a/b (for example, greater than 110) indicates a high relative percentage of the cyclic carbonate and limited improvement of transmission of lithium ions by the electrolyte, which is likely to cause lithium precipitation on the negative electrode plate, thereby affecting kinetic performance (for example, rate performance) and safety performance of the electrochemical apparatus. The values of the working length b of the positive tab and a/b are controlled within the foregoing ranges, for example, the working length b of the positive tab may be 0.5 m, 1 m, 1.5 m, 2 m, 2.5 m, 3 m, or in any range therebetween, and the value of a/b may be 13, 20, 30, 40, 50, 60, 70, 80, 90, 10, 110, or in any range therebetween, and the foregoing cyclic carbonate with excellent electrochemical stability and thermal stability is selected, helping form a synergistic effect between the positive electrode plate and the electrolyte, so as to improve cycling performance, high-temperature performance, safety performance, and the like of the electrochemical apparatus without affecting kinetic performance of the electrochemical apparatus, thereby improving comprehensive performance of the electrochemical apparatus. When the electrolyte includes both EC and PC, a mass ratio of EC and PC is not particularly limited in this application, provided that the objectives of this application can be achieved. For example, the mass ratio of EC and PC may be 1:5 to 4: 1.

In some embodiments of this application, 25≤a≤60, and 14.5≤a/b≤110. Specifically, when the value of a/b is within the foregoing range, and a value of a is excessively small (for example, less than 25), that is, the mass percentage of the cyclic carbonate is excessively low, it is not conducive to forming a good protective interface on a surface of the positive electrode plate to reduce the side reactions between the positive electrode active material and the electrolyte, which affects the cycling performance of the electrochemical apparatus and is also not conducive to improving the high-temperature performance of the electrochemical apparatus. When the value of a is excessively large (for example, greater than 60), that is, the mass percentage of the cyclic carbonate is excessively high, viscosity of the electrolyte is increased, affecting the transmission of lithium ions, which is likely to cause lithium precipitation on the negative electrode plate, thereby affecting the kinetic performance and safety performance of the electrochemical apparatus. The value of a is controlled within the foregoing range, for example, a may be 25, 30, 35, 40, 45, 50, 55, 60, or in any range therebetween, so that the cyclic carbonate has a proper mass percentage, which is conducive to forming a good protective interface on the surface of the positive electrode plate to reduce the side reactions between the positive electrode active material and the electrolyte, and can also passivate an interface of the part with lithium precipitation of the negative electrode plate, which can improve the safety performance of the electrochemical apparatus without affecting the kinetic performance of the electrochemical apparatus, thereby improving the comprehensive performance of the electrochemical apparatus.

In some embodiments of this application, the positive electrode plate includes a positive electrode current collector and a positive electrode material layer provided on at least one surface of the positive electrode current collector, a coating mass of the positive electrode material layer is C g/1540.25 mm², and the electrochemical apparatus satisfies 50≤a/C≤300. When a/C satisfies the foregoing range, the electrochemical apparatus can improve concentration polarization between a positive electrode current collector side and a separator side of the positive electrode material layer while not losing energy density, so as to reduce, in a thickness direction of the positive electrode plate, local overheating, material phase transition, and lithium precipitation of the negative electrode plate that are caused by a large local current density and polarization problem, thereby improving the safety performance, cycling performance, and high-temperature performance of the electrochemical apparatus. A value of a/C is controlled within the foregoing range, for example, the value of ≤a/C may be 50, 100, 150, 175, 200, 250, 300, or in any range therebetween, so that the cycling performance, high-temperature performance, and safety performance of the electrochemical apparatus can be improved without affecting the kinetic performance and energy density of the electrochemical apparatus, thereby improving the comprehensive performance of the electrochemical apparatus. The at least one surface of the positive electrode current collector refers to at least one surface of two surfaces in a thickness direction of the positive electrode current collector.

In some embodiments of this application, 0.2≤C≤0.5. Specifically, 0.2≤C≤0.5 is satisfied so that the positive electrode plate can maintain transmission efficiency of ions and electrons in the positive electrode material layer while guaranteeing energy density. A value of C is controlled within the foregoing range, for example, the value of C may be 0.2, 0.25, 0.3, 0.35, 0.4, 0.45, 0.5, or in any range therebetween, so that the positive electrode material layer has an appropriate coating mass, which can improve the safety performance of the electrochemical apparatus without affecting the energy density of the electrochemical apparatus, thereby improving the comprehensive performance of the electrochemical apparatus.

In some embodiments of this application, the electrolyte includes a polynitrile compound, a mass percentage d% of the polynitrile compound is 0.5% to 5% based on the mass of the electrolyte, and the polynitrile compound includes at least one of glutaronitrile, adiponitrile (ADN), succinonitrile (SN), butenenitrile, 3-methyl butene nitrile, 1,2-bis(cyanoethoxy)ethane (DENE), 1,3,5-hexanetricarbonitrile, 1,3,6-hexanetricarbonitrile (HTCN), 1,2,3-tris(2-cyanoethoxy)propane, or 1,3,4,6-hexanetetracarbonitrile. Preferably, the electrolyte includes at least one of glutaronitrile, adiponitrile, succinonitrile, or 1,2-bis(cyanoethoxy)ethane; and at least one of 1,3,5-hexanetricarbonitrile, 1,3,6-hexanetricarbonitrile, 1,2,3-tris(2-cyanoethoxy)propane, or 1,3,4,6-hexanetetracarbonitrile. Addition of the foregoing polynitrile compound into the electrolyte is conducive to suppressing phase transition of the positive electrode active material, so as to reduce the side reactions between the positive electrode active material and the electrolyte to further improve the safety performance and cycling performance of the electrochemical apparatus, thereby improving the comprehensive performance of the electrochemical apparatus. Specifically, when the mass percentage of the polynitrile compound is excessively low (for example, less than 0.5%), the cycling performance and safety performance of the electrochemical apparatus are not obviously improved. When the mass percentage of the polynitrile compound is excessively high (for example, greater than 5%), the viscosity of the electrolyte is increased, affecting the transmission of lithium ions, which is likely to cause lithium precipitation on the negative electrode plate, thereby affecting the kinetic performance and safety performance of the electrochemical apparatus. The mass percentage of the polynitrile compound is controlled within the foregoing range, for example, the mass percentage of the polynitrile compound may be 0.5%, 1%, 1.5%, 2%, 2.5%, 3%, 3.5%, 4%, 4.5%, 5%, or in any range therebetween, which is conducive to improving the safety performance and cycling performance of the electrochemical apparatus without affecting the kinetic performance of the electrochemical apparatus. Selection of the foregoing polynitrile compound is more conducive to improving stability of the positive electrode active material and forming a synergistic effect with the cyclic carbonate, so as to improve the cycling performance, high-temperature performance, safety performance, and the like of the electrochemical apparatus, thereby improving the comprehensive performance of the electrochemical apparatus.

In some embodiments of this application, the positive electrode plate includes a positive electrode active material, and a Dᵥ10 of the positive electrode active material and the mass percentage d% of the polynitrile compound numerically satisfy: 0.2≤d/Dᵥ10≤4; and 1 µm≤Dᵥ10≤5 µm. Values of d/Dᵥ10 and Dᵥ10 are controlled within the foregoing ranges, for example, the value of d/Dᵥ10 may be 0.2, 0.4, 0.8, 1.2, 1.6, 2.0, 2.5, 3.0, 3.5, 4.0, or in any range therebetween, and the value of Dᵥ10 may be 1 µm, 2 µm, 3 µm, 4 µm, 5 µm, or in any range therebetween, helping form a synergistic effect between the positive electrode plate and the electrolyte, so as to improve the cycling performance, high-temperature performance, safety performance, and the like of the electrochemical apparatus, thereby improving the comprehensive performance of the electrochemical apparatus. Dᵥ10 refers to a particle size at which the cumulative volume distribution percentage of the positive electrode active material reaches 10%.

In some embodiments of this application, the electrolyte includes a sulfur-oxygen double bond-containing compound, a mass percentage of the sulfur-oxygen double bond-containing compound is 0.01% to 8% based on the mass of the electrolyte, and the sulfur-oxygen double bond-containing compound includes at least one of 1,3-propane sultone (PS), ethylene sulfate (DTD), methylene methanedisulfonate (MMDS), propenyl-1,3-sultone (PES), tetrafluoroethane-beta-sultone, 2,4-butane sultone, 1,4-butane sultone, 1,8-naphthosultone, or ethylene sulfite. Addition of the foregoing sulfur-oxygen double bond-containing compound into the electrolyte can improve stability of the protective interface on the surface of the positive electrode plate and also improve stability of the positive electrode active material, so as to suppress phase transition of the positive electrode active material and its side reactions with the electrolyte, further improving the safety performance and cycling performance of the electrochemical apparatus, thereby improving the comprehensive performance of the electrochemical apparatus. Specifically, when the mass percentage of the sulfur-oxygen double bond-containing compound is relatively low (for example, less than 0.01%), the cycling performance and safety performance of the electrochemical apparatus are not obviously improved. When the mass percentage of the sulfur-oxygen double bond-containing compound is relatively high (for example, greater than 8%), the protective interfaces formed on the surface of the positive electrode plate and a surface of the negative electrode plate have excessively high density, affecting the transmission of lithium ions, thereby affecting the kinetic performance of the electrochemical apparatus. The mass percentage of the sulfur-oxygen double bond-containing compound is controlled within the foregoing range, for example, the mass percentage of the sulfur-oxygen double bond-containing compound may be 1%, 2%, 3%, 4%, 4.5%, 5%, 6%, 7%, 8%, or in any range therebetween, which is conducive to improving the safety performance and cycling performance of the electrochemical apparatus without affecting the kinetic performance of the electrochemical apparatus. Selection of the foregoing sulfur-oxygen double bond-containing compound is more conducive to improving stability of the positive electrode active material and forming a synergistic effect with the cyclic carbonate, so as to improve the cycling performance, high-temperature performance, safety performance, and the like of the electrochemical apparatus, thereby improving the comprehensive performance of the electrochemical apparatus.

In some embodiments of this application, the electrolyte includes a sulfur-oxygen double bond-containing compound, and a mass percentage of the sulfur-oxygen double bond-containing compound is 0.5% to 5% based on the mass of the electrolyte. The sulfur-oxygen double bond-containing compound includes propenyl-1,3-sultone (PES), and a mass percentage of the propenyl-1,3-sultone is 0.5% to 2% based on the mass of the electrolyte. When the electrochemical apparatus satisfies 13≤a/b≤110, addition of the propenyl-1,3-sultone (PES) into the electrolyte has a significant suppressing effect on phase transition of the positive electrode active material caused by large local current density and polarization of the positive electrode plate, thereby further improving the cycling performance, high-temperature performance, and a swelling rate in floating charge of the electrochemical apparatus.

In some embodiments of this application, the electrolyte includes a lithium salt additive, a mass percentage e% of the lithium salt additive is 0.01% to 2% and preferably 0.01% to 1% based on the mass of the electrolyte, and the lithium salt additive includes at least one of lithium difluorophosphate (LiPO₂F₂), lithium difluorooxalatoborate (LiDFOB), lithium bisoxalatoborate (LiBOB), lithium tetrafluoroborate (LiBF₄), lithium tetraborate (B₄Li₂O₇), lithium borate (Li₃BO₃), or lithium trifluoromethanesulfonate (CF₃LiO₃S). When the electrochemical apparatus satisfies 13≤a/b≤110, addition of the foregoing lithium salt additive can improve stability of a positive electrolyte interface on the surface of the positive electrode plate and also improve stability of the positive electrode active material, so as to suppress phase transition of the positive electrode active material and its side reactions with the electrolyte in the positive electrode plate. A stable solid electrolyte interface can also be formed on the surface of the negative electrode plate, suppressing side reactions between the electrolyte and a negative electrode active material, further improving the safety performance and cycling performance of the electrochemical apparatus, thereby improving the comprehensive performance of the electrochemical apparatus. Specifically, when the mass percentage of the lithium salt additive is relatively low (for example, less than 0.01%), the cycling performance and safety performance of the electrochemical apparatus are not obviously improved. When the mass percentage of the lithium salt additive is relatively high (for example, greater than 2%), the solid electrolyte interface formed on the surface of the negative electrode plate has excessively high density, affecting the transmission of lithium ions, thereby affecting the kinetic performance of the electrochemical apparatus. The mass percentage of the lithium salt additive is controlled within the foregoing range, for example, the mass percentage of the lithium salt additive may be 0.01%, 0.05%, 0.1%, 0.5%, 1%, 1.5%, 2%, or in any range therebetween, which is conducive to improving the safety performance and cycling performance of the electrochemical apparatus without affecting the kinetic performance of the electrochemical apparatus. Selection of the foregoing lithium salt additive is more conducive to improving stability of the positive electrode active material and stability of the solid electrolyte interface and forming a synergistic effect with the cyclic carbonate, so as to improve the cycling performance, high-temperature performance, safety performance, and the like of the electrochemical apparatus, thereby improving the comprehensive performance of the electrochemical apparatus.

In some embodiments of this application, the positive electrode plate includes a positive electrode material layer, the positive electrode active material in the positive electrode material layer includes element A, a mass percentage of element A is 0.001% to 2% and preferably 0.05% to 0.5% based on a mass of the positive electrode active material, and element A includes at least one of Al, B, Cr, Fe, Mg, Na, S, Ti, Zr, Y, Nb, Mo, W, F, or P. Introduction of the foregoing element A into the positive electrode active material and the mass percentage of element A being controlled within the foregoing range are conducive to forming a synergistic effect with the electrolyte in any one of the foregoing embodiments, so as to improve the cycling performance, high-temperature performance, safety performance, and the like of the electrochemical apparatus, thereby improving the comprehensive performance of the electrochemical apparatus. The positive electrode active material is not particularly limited in this application, provided that the objectives of this application can be achieved. For example, the positive electrode active material may include but is not limited to at least one of lithium cobaltate, lithium nickel cobalt manganese oxide, lithium nickel cobalt aluminate, lithium manganate, lithium nickel manganese oxide, or lithium iron phosphate. It can be understood that the foregoing positive electrode active material may include the foregoing element A. Dᵥ50 and Dᵥ90 of the positive electrode active material are not particularly limited in this application, provided that the objectives of this application can be achieved. For example, Dᵥ50 of the positive electrode active material is 0.4 µm to 20 µm, and Dᵥ90 of the positive electrode active material is 2 µm to 40 µm. Dᵥ50 refers to a particle size at which the cumulative volume distribution percentage of the positive electrode active material reaches 50%. Dᵥ90 refers to a particle size at which the cumulative volume distribution percentage of the positive electrode active material reaches 90%.

A preparation method of positive electrode active material containing element A is not particularly limited in this application, provided that the objectives of this application can be achieved. For example, the preparation method of positive electrode active material containing element A includes but is not limited to the following steps: mixing and calcining raw materials for preparing positive electrode active material containing element A to obtain a positive electrode active material containing element A. Element A is introduced in a manner that adds an oxide of element A as a raw material, where the oxide of element A may be added initially in combination with other raw materials or may be added during calcination. The mass percentage of element A in the positive electrode active material is implemented through controlling an amount of the oxide of element A added. Generally, as the amount of the oxide of element A added increases, the mass percentage of element A in the positive electrode active material increases accordingly; and as the amount of the oxide of element A added decreases, the mass percentage of element A in the positive electrode active material decreases accordingly. The foregoing raw materials for preparing positive electrode active material containing element A and a concentration ratio of the raw materials may be selected based on actually required positive electrode active material containing element A. These are not limited in this application. Temperature and time for preparing positive electrode active material known in the art may be used as temperature and time of the foregoing calcination. These are not limited in this application. The oxide of element A is a most commonly used oxide among all oxides of element A in the preparation of positive electrode active material.

In this application, the positive electrode material layer is disposed on at least one of two surfaces in a thickness direction of the positive electrode current collector. It can be understood that the "surface" herein may be an entire region of the positive electrode current collector, or may be a partial region of the positive electrode current collector. This is not particularly limited in this application, provided that the objectives of this application can be achieved. In this application, the positive electrode current collector is not particularly limited, provided that the objectives of this application can be achieved. For example, the positive electrode current collector may include but is not limited to aluminum foil, aluminum alloy foil, or a composite current collector, and preferably aluminum foil. In this application, thickness of the positive electrode current collector is not particularly limited, provided that the objectives of this application can be achieved. For example, the thickness of the positive electrode current collector is 1 µm to 30 µm, and preferably 5 µm to 12 µm.

In this application, the positive electrode material layer may further include a binder, and the binder is not particularly limited in this application, provided that the objectives of this application can be achieved. For example, the binder may include but is not limited to at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene.

In this application, the positive electrode material layer may further include a conductive agent, and the conductive agent is not particularly limited in this application, provided that the objectives of this application can be achieved. For example, the conductive agent may include but is not limited to at least one of natural graphite, laminated graphite, artificial graphite, conductive carbon black (Super P), carbon nanotubes (CNTs), carbon fiber, flake graphite, Ketjen black, graphene, a metal material, or a conductive polymer. The carbon nanotubes may include but are not limited to single-wall carbon nanotubes and/or multi-wall carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

Proportions of the positive electrode active material, conductive agent, and binder in the positive electrode material layer are not particularly limited in this application, and can be proportions known in the art. For example, a mass ratio of the positive electrode active material, conductive agent, and binder may be (78-99):(0.1-10):(0.1-10).

Optionally, the positive electrode plate may further include a conductive layer, and the conductive layer is sandwiched between the positive electrode current collector and the positive electrode material layer. Composition of the conductive layer is not particularly limited in this application, and the conductive layer may be a conductive layer commonly used in the art. For example, the conductive layer may include but is not limited to the foregoing conductive agent and binder.

In this application, the electrochemical apparatus may include the foregoing negative electrode plate, where the negative electrode plate generally includes a negative electrode current collector and a negative electrode material layer, and the negative electrode material layer may be disposed on one surface in a thickness direction of the negative electrode current collector or may be disposed on two surfaces in the thickness direction of the negative electrode current collector. It should be noted that the "surface" herein may be an entire region of the negative electrode current collector, or may be a partial region of the negative electrode current collector. This is not particularly limited in this application, provided that the objectives of this application can be achieved. The negative electrode current collector is not particularly limited in this application, provided that the objectives of this application can be achieved. For example, the negative electrode current collector may include but is not limited to copper foil, copper alloy foil, nickel foil, stainless steel foil, titanium foil, foamed nickel, foamed copper, a carbon-based current collector, or a composite current collector. Thickness of the negative electrode plate is not particularly limited in this application, provided that the objectives of this application can be achieved. For example, the thickness of the negative electrode plate is 4 µm to 12 µm.

In this application, the negative electrode material layer includes a negative electrode active material, and the negative electrode active material is not particularly limited, provided that the objectives of this application can be achieved. For example, the negative electrode active material may include but is not limited to at least one of graphite, hard carbon, silicon, silicon monoxide, or silicone.

In this application, the negative electrode material layer may further include a conductive agent, and the conductive agent is not particularly limited in this application, provided that the objectives of this application can be achieved. For example, the conductive agent may include but is not limited to at least one of the foregoing conductive agents.

In this application, the negative electrode material layer may further include a binder, and the binder is not particularly limited in this application, provided that the objectives of this application can be achieved. For example, the binder may include but is not limited to at least one of the foregoing binders.

Proportions of the negative electrode active material, conductive agent, and binder in the negative electrode material layer are not particularly limited in this application, and can be proportions known in the art. For example, a mass ratio of the negative electrode active material, conductive agent, and binder may be (78-98.5):(0.1-10):(0.1-10).

Optionally, the negative electrode plate may further include a conductive layer, and the conductive layer is sandwiched between the negative electrode current collector and the negative electrode material layer. Composition of the conductive layer is not particularly limited in this application, the conductive layer may be a conductive layer commonly used in the art, and the conductive layer may include but is not limited to the foregoing conductive agent and binder.

In some embodiments, the electrolyte may further include a P-O bond-containing compound, and the P-O bond-containing compound may include but is not limited to at least one of tris(trimethylsilyl)phosphate (TMSP), tris(trimethylsilyl)phosphite (TTSPi), triallylphosphate, tripropargyl phosphate, triallylphosphite, or tripropargyl phosphite. A mass percentage of the P-O bond-containing compound is 0.1% to 10% based on the mass of the electrolyte.

In this application, the electrolyte may further include a non-aqueous solvent, and the non-aqueous solvent may include but is not limited to at least one of a carbonate compound, a carboxylate compound, an ether compound, or another organic solvent. The carbonate compound may include but is not limited to a linear carbonate compound and/or a fluorocarbonate compound. The linear carbonate compound may include but is not limited to at least one of ethyl methyl carbonate

(EMC), diethyl carbonate (DEC), dimethyl carbonate (DMC), dipropyl carbonate (DPC), methyl propyl carbonate (MPC), ethylene propyl carbonate (EPC), or ethyl methyl carbonate (MEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl acetate, ethyl acetate, n-propyl acetate, tert-butyl acetate, methyl propionate, ethyl propionate (EP), propyl propionate (PP), γ-butyrolactone, decanolide, valerolactone, mevalonolactone, caprolactone, or methyl formate. The ether compound may include but is not limited to at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester. Based on the mass of the electrolyte, a mass percentage of the foregoing non-aqueous solvent is 40% to 75%, for example, 40%, 45%, 50%, 55%, 60%, 65%, 70%, 75%, or in any range therebetween.

In this application, the electrolyte may further include a lithium salt, and the lithium salt is not particularly limited in this application, provided that the objectives of this application can be achieved. For example, the lithium salt may include but is not limited to at least one of LiPF₆, LiClO₄, LiB(C₆H₅)₄, LiCH₃SO₃, LiN(SO₂CF₃)₂, LiC(SO₂CF₃)₃, LiSiF₆, or lithium difluoroborate. Preferably, the lithium salt includes LiPF₆.

In this application, a density of the electrolyte is 1.10 g/mL to 1.35 g/mL, and preferably 1.15 g/mL to 1.30 g/mL. When the density of the electrolyte satisfies the foregoing range, the electrolyte can better meet the demand for transmission of lithium ions during a charge and discharge process of the electrochemical apparatus.

In this application, the electrochemical apparatus may include a separator, and a material of the separator may include but is not limited to at least one of polyethylene, polypropylene, polyvinylidene fluoride, polyethylene terephthalate, polyimide, or aramid, and preferably polyethylene and/or polypropylene. For example, polyethylene may include but is not limited to at least one of high-density polyethylene, low-density polyethylene, or ultra-high-molecular-weight polyethylene. The separator of this application may have a porous structure, and a pore size is not particularly limited, provided that the objectives of this application can be achieved. For example, the pore size may be 0.01 µm to 1 µm. In this application, thickness of the separator is not particularly limited, provided that the objectives of this application can be achieved. For example, the thickness of the separator is 5 µm to 500 µm.

Optionally, a surface of the separator may further include a porous layer. The porous layer is disposed on one surface in a thickness direction of a substrate of the separator, or may be disposed on two surfaces in a thickness direction of the separator. It should be noted that the "surface" herein may be an entire region of the separator, or may be a partial region of the separator. This is not particularly limited in this application, provided that the objectives of this application can be achieved. The porous layer includes inorganic particles and a porous layer binder, where the inorganic particles may include but are not limited to at least one of aluminum oxide (Al₂O₃), silicon dioxide (SiO₂), magnesium oxide (MgO), titanium oxide (TiO₂), hafnium dioxide (HfO₂), stannic oxide (SnO₂), cerium dioxide (CeO₂), nickel oxide (NiO), zinc oxide (ZnO), calcium oxide (CaO), zirconium dioxide (ZrO₂), yttrium oxide (Y₂O₃), silicon carbide (SiC), boehmite, aluminum hydroxide, magnesium hydroxide, calcium hydroxide, or barium sulfate. The porous layer binder may include but is not limited to at least one of polyvinylidene fluoride, vinylidene fluoride-hexafluoropropylene copolymer, polyamide, polyacrylonitrile, polyacrylate, polyacrylic acid, polyacrylic acid salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the positive electrode plate or negative electrode plate.

A process for preparing the electrochemical apparatus is well known to a person skilled in the art, and is not particularly limited in this application. For example, the process may include but is not limited to the following steps: a positive electrode plate, a separator, and a negative electrode plate are stacked in sequence and go through operations such as winding and folding as needed to obtain an electrode assembly with a wound structure, the electrode assembly is put into a packaging bag, and the packaging bag is injected with an electrolyte and sealed to obtain an electrochemical apparatus; or a positive electrode plate, a separator, and a negative electrode plate are stacked in sequence, four corners of an entire laminated structure are fixed with tapes to obtain an electrode assembly with a laminated structure, the electrode assembly is put into a packaging bag, and the packaging bag is injected with an electrolyte and sealed to obtain an electrochemical apparatus. In addition, an over-current protection element, a guide, and the like may also be placed into the packaging bag as needed, so as to prevent pressure increase, overcharge, and discharge inside the electrochemical apparatus.

A second aspect of this application provides an electronic apparatus, including the electrochemical apparatus according to any one of the foregoing embodiments. The electrochemical apparatus provided in this application has good comprehensive performance, and the electronic apparatus obtained has longer service life.

The electronic apparatus of this application is not particularly limited, and may be any known electronic apparatus used in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc player, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

### Examples

The following describes the embodiments of this application more specifically by using examples and comparative examples. Various tests and evaluations were performed in the following methods. In addition, unless otherwise specified, "%" refers to a mass percentage.

### Test method and device

### Cycling performance test

The lithium-ion battery was put in a 45°C thermostat and left standing for 30 min so that the lithium-ion battery reached a constant temperature. The lithium-ion battery that had reached a constant temperature was charged at a constant current of 1C to a voltage of 4.35 V, then charged at a constant voltage of 4.35 V to a current of 0.05C, and then discharged at a constant current of 1C to a voltage of 2.8 V. This was one charge and discharge cycle. The first cycle discharge capacity was defined as 100%. The charge and discharge cycle was repeated until the discharge capacity decayed to 80%. Then the number of cycles was recorded as the number of cycles at 45°C and as an indicator for evaluating the cycling performance of the lithium-ion battery.

### High-temperature storage performance test

The lithium-ion battery was put in a 25°C thermostat and left standing for 30 min so that the lithium-ion battery reached a constant temperature. The lithium-ion battery was charged at a constant current of 1C to 4.35 V, then charged at a constant voltage to a current of 0.05C, and then discharged at a constant current of 1C to 2.8 V. The lithium-ion battery was then charged at a constant current of 0.5C to 4.35 V, and then charged at a constant voltage to a current of 0.05C. A thickness of the battery was measured with a micrometer and recorded as an initial thickness. The lithium-ion battery under test was put into a 70°C thermostat and stored there for 48h. During this period, the thickness of the lithium-ion battery was tested and recorded every 6h. After the 48h storage, the lithium-ion battery was transferred into a 25°C thermostat, left there for 60 min, and discharged at a constant current of 1C to 2.8 V. The discharge capacity then was recorded as a remaining capacity of the lithium-ion battery. The lithium-ion battery was charged at a constant current of 1C to 4.35 V, then charged at a constant voltage to a current of 0.05C, and then discharged at a constant current of 1C to 2.8 V. The discharge capacity was recorded as a recoverable discharge capacity of the lithium-ion battery, the thickness of the lithium-ion battery at that time was recorded as a thickness after test, and a thickness swelling rate after storage was calculated and used as an indicator for evaluating gas production of the lithium-ion battery under high temperature storage. Thickness swelling rate after storage=(thickness after test-initial thickness)/initial thickness×100%.

### Overcharge test

### (1). Overcharge test at 3C and 4.6 V

The lithium-ion battery was discharged at 0.5C at 25°C to 2.8 V, charged at a constant current of 3C to 4.6 V, and then charged at a constant voltage for 2h. Surface temperature changes of the lithium-ion battery were monitored, and the lithium-ion battery that did not catch fire, burn, or explode was recorded as passing the test. 10 lithium-ion batteries were tested for each example and comparative example, and the number of lithium-ion batteries that passed the test was recorded.

### (2). Overcharge test at 3C and 4.8 V

The lithium-ion battery was discharged at 0.5C at 25°C to 2.8 V, charged at a constant current of 3C to 4.8 V, and then charged at a constant voltage for 2h. Surface temperature changes of the lithium-ion battery were monitored, and the lithium-ion battery that did not catch fire, burn, or explode was recorded as passing the test. 10 lithium-ion batteries were tested for each example and comparative example, and the number of lithium-ion batteries that passed the test was recorded.

### (3). Overcharge test at 3C and 5.4 V

The lithium-ion battery was discharged at 0.5C at 25°C to 2.8 V, charged at a constant current of 3C to 5.4 V, and then charged at a constant voltage for 2h. Surface temperature changes of the lithium-ion battery were monitored, and the lithium-ion battery that did not catch fire, burn, or explode was recorded as passing the test. 10 lithium-ion batteries were tested for each example and comparative example, and the number of lithium-ion batteries that passed the test was recorded.

### Hot box test

The lithium-ion battery was charged at a constant current of 0.5C at 25°C to 4.35 V, and charged at a constant voltage of 4.35 V to a current less than or equal to 0.05C. The fully charged lithium-ion battery was put in a high and low temperature box which was heated to 130°C at a rate of 5°C/min and kept at 130°C for 1h. The lithium-ion battery was monitored. The lithium-ion battery that did not catch fire, burn, or explode was recorded as passing the test. 10 lithium-ion batteries were tested for each example and comparative example, and the number of lithium-ion batteries that passed the test was recorded.

### Floating charge test

The lithium-ion battery was put in a 25°C thermostat and left standing for 30 min so that the lithium-ion battery reached a constant temperature. The lithium-ion battery was charged at a constant current of 1C to 4.35 V, and then charged at a constant voltage to a current of 0.05C. A thickness of the lithium-ion battery was measured with a micrometer and recorded as an initial thickness. The lithium-ion battery was transferred into a 45°C thermostat and charged continuously at a current of 1C for 60 days. After that, the lithium-ion battery was transferred into a 25°C thermostat, and the thickness of the lithium-ion battery was measured and recorded as a thickness after 60 days of floating charge. A thickness swelling rate in floating charge of the lithium-ion battery during the floating charge test was calculated and used as an indicator for evaluating floating charge performance of the lithium-ion battery. Thickness swelling rate=(thickness after 60 days of floating charge-initial thickness)/initial thickness×100%.

### Particle size test

In accordance with the national standard GB/T 19077-2016 (*Particle size analysis-Laser diffraction methods*), a laser particle size analyzer (for example, Malvern Master Size 3000) was used to determine Dᵥ10 of the positive electrode active material.

### Example 1-1

### <Preparation of positive electrode plate>

A positive electrode active material LiNi_{0.5}Co_{0.2}Mn_{0.3}O₂, a conductive agent conductive carbon black, and a binder polyvinylidene fluoride were mixed at a mass ratio of 97:1.4:1.6, added with N-methylpyrrolidone (NMP), and well stirred by a vacuum stirrer to obtain a positive electrode slurry with a solid content of 70wt%. The positive electrode slurry was uniformly applied onto one surface of a positive electrode current collector aluminum foil with a thickness of 10 µm, and the aluminum foil was dried at 85°C for 1h to obtain a positive electrode plate having a single surface coated with a positive electrode material layer, where a coating mass of the positive electrode material layer was 0.3 g/1540.25 mm². The foregoing steps were repeated on another surface of the positive electrode plate to obtain a positive electrode plate coated with positive electrode material layers on two surfaces. Drying was performed at 85°C for 1h under vacuum, followed by cold calendering, cutting, and slitting, to obtain a positive electrode plate with a size of 65 mm×2010 mm. A positive tab was welded to the positive electrode plate, a working length b of the positive tab was 2 m, and a width of the positive tab was 10 mm in a length direction of the positive electrode plate. Dᵥ10 of the positive electrode active material was 2.5 µm.

### <Preparation of negative electrode plate>

A negative electrode active material artificial graphite, a conductive agent conductive carbon black, a thickener sodium carboxymethyl cellulose, and a binder styrene-butadiene rubber were mixed at a mass ratio of 96.4:1.5:0.5:1.6, added with deionized water, and well stirred by a vacuum stirrer to obtain a negative electrode slurry with a solid content of 54wt%. The negative electrode slurry was uniformly applied onto one surface of a negative electrode current collector copper foil with a thickness of 7 µm, and the copper foil was dried at 85°C to obtain a negative electrode plate having a single surface coated with a negative electrode material layer of 50 µm in thickness. The foregoing steps were repeated on another surface of the copper foil to obtain a negative electrode plate coated with negative electrode material layers on two surfaces. Drying was performed at 85°C for 1h under vacuum, followed by cold calendering, cutting, and slitting, to obtain a negative electrode plate with a size of 68 mm×2015 mm. In a length direction of the negative electrode plate (the same as the length direction of the positive electrode plate), a width of a negative tab was 15 mm.

### <Preparation of electrolyte>

In a glove box under argon atmosphere with a moisture content less than 10ppm, EC, PC, EMC, and DEC were mixed at a mass ratio of 10:20:20:50 to obtain an organic solvent, and then a lithium salt LiPF₆ was added to the organic solvent to obtain an electrolyte. A mass percentage of the lithium salt was 12.5%.

### <Preparation of separator>

A polyethylene film (provided by Celgard) with a thickness of 7 µm was used.

### <Preparation of lithium-ion battery>

The prepared positive electrode plate, separator, and negative electrode plate were stacked in sequence, so that the separator was sandwiched between the positive electrode plate and the negative electrode plate for separation. Then winding was performed to obtain an electrode assembly. The electrode assembly was placed into an aluminum-plastic film packaging bag and dried. Then the electrolyte was injected, and processes such as vacuum packaging, standing, formation, degassing, and trimming were performed to obtain a lithium-ion battery.

### Example 1-2 to Example 1-11, Example 1-13 and Example 1-14

These examples were the same as Example 1-1 except that the related preparation parameters were adjusted according to Table 1. When b was 0.5 m, 1 m, or 3 m, the size of the positive electrode plates was adjusted to 65 mm×510 mm, 65 mm×1010 mm, and 65 mm×3010 mm respectively, and the size of the negative electrode plates was adjusted to 68 mm×515 mm, 68 mm×1015 mm, and 68 mm×3015 mm respectively.

### Example 1-12

This example was the same as Example 1-1 except the following: two tabs were welded to the positive electrode plate and the negative electrode plate, a size of the positive electrode plate was 65 mm×2030 mm, a size of the negative electrode plate was 65 mm×2040 mm, L3 was 10 mm, L4 was 1000 mm, and L5 was 1000 mm.

### Example 1-15 and Example 1-16

These examples were the same as Example 1-1 except that the positive electrode active material was changed to lithium cobaltate, and that the related preparation parameters were adjusted according to Table 1.

### Example 2-1, Example 2-2, and Example 2-4

These examples were the same as Example 1-3 except that the related preparation parameters were adjusted according to Table 2.

### Example 2-3

This example was the same as Example 1-8 except that the related preparation parameters were adjusted according to Table 2.

### Example 3-1 to Example 3-11

These examples were the same as Example 1-3 except that the polynitrile compound was added as shown in Table 3 when preparing the electrolyte.

### Example 4-1 to Example 4-9

These examples were the same as Example 1-3 except that the sulfur-oxygen double bond-containing compound was added as shown in Table 4 when preparing the electrolyte.

### Example 5-1 to Example 5-7

These examples were the same as Example 1-3 except that the lithium salt additive was added as shown in Table 5 when preparing the electrolyte.

### Example 6-1 to Example 6-4

These examples were the same as Example 1-3 except that at least two of the polynitrile compound, the sulfur-oxygen double bond-containing compound, or the lithium salt additive were added as shown in Table 6 when preparing the electrolyte.

### Example 7-1 to Example 7-9

These examples were the same as Example 1-3 except that the related preparation parameters were adjusted according to Table 7.

### Comparative Example 1 to Comparative Example 3

These examples were the same as Example 1-1 except that the related preparation parameters were adjusted according to Table 1. When b was 4 m, the size of the positive electrode plate was adjusted to 65 mm×4010 mm, and the size of the negative electrode plate was adjusted to 68 mm×4015 mm.

The preparation parameters and performance tests of Examples and Comparative Examples are shown in Table 1 to Table 7.

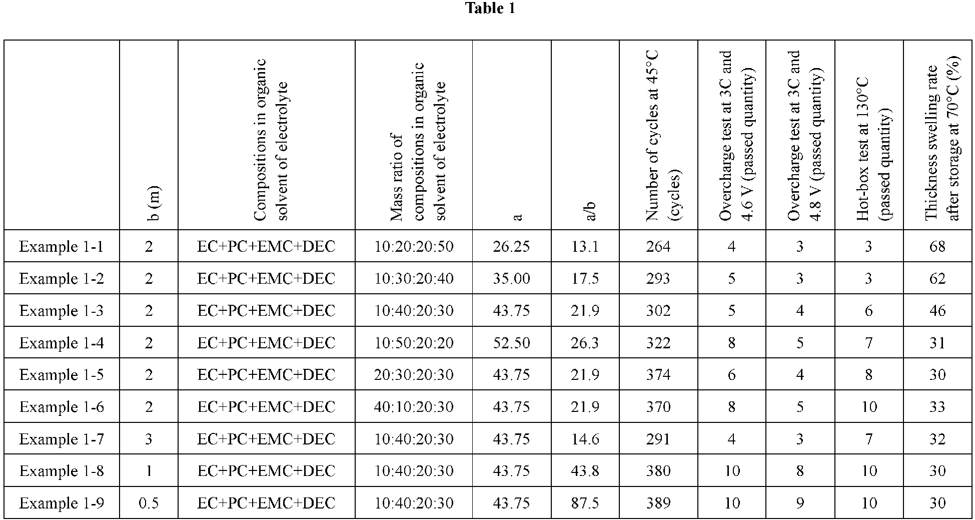

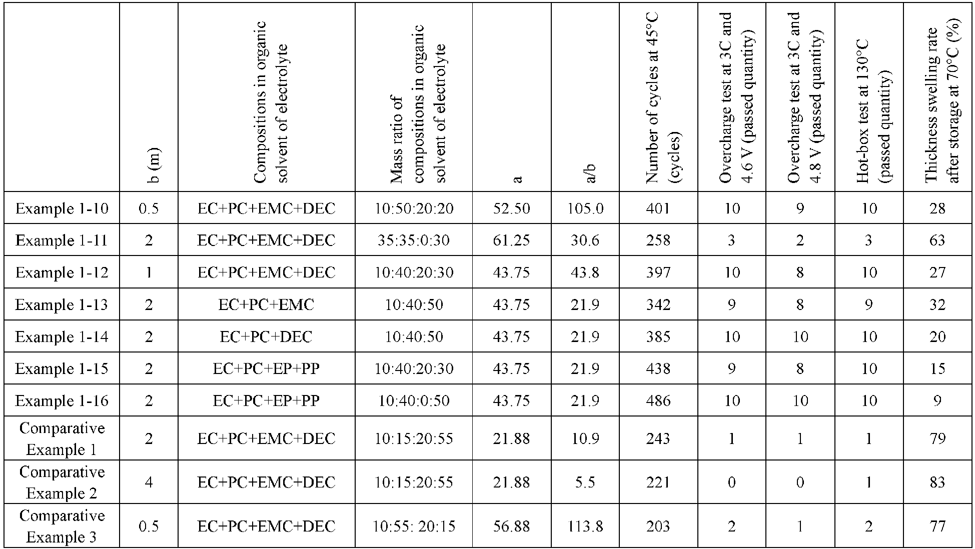

It can be learned from Example 1-1 to Example 1-16 and Comparative Example 1 to Comparative Example 3 that, when b and a/b are within the ranges defined in this application, the number of cycles of the lithium-ion battery increases, indicating that cycling performance of the lithium-ion battery is improved. In addition, the number of lithium-ion batteries that pass the overcharge test and hot box test increases, and the thickness swelling rate after storage decreases, indicating that both safety performance and high-temperature performance of the lithium-ion battery are improved. Generally speaking, compared with the lithium-ion battery in the comparative examples, comprehensive performance of the lithium-ion battery in this application is improved. The mass percentage of the cyclic carbonate generally affects performance of the lithium-ion battery. It can be learned from Example 1-1 to Example 1-16 that, when the mass percentage of the cyclic carbonate is within the range defined in this application, the lithium-ion battery obtained has better cycling performance, high-temperature performance, and safety performance, that is, better comprehensive performance.

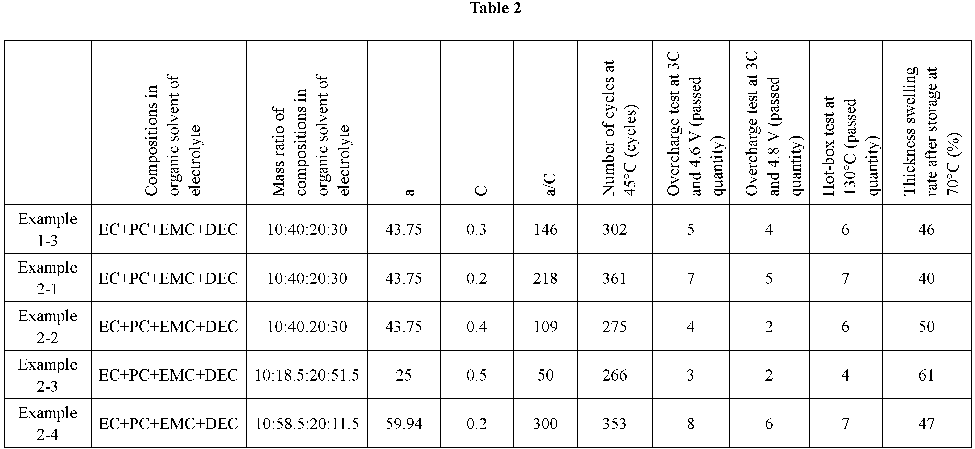

The coating mass C of the positive electrode material layer and the value of a/C generally also affect the performance of the lithium-ion battery. It can be learned from Example 1-3 and Example 2-1 to Example 2-4 that, when the coating mass C of the positive electrode material layer and the value of a/C are within the ranges defined in this application, the lithium-ion battery obtained has good cycling performance, high-temperature performance, and safety performance, that is, good comprehensive performance.

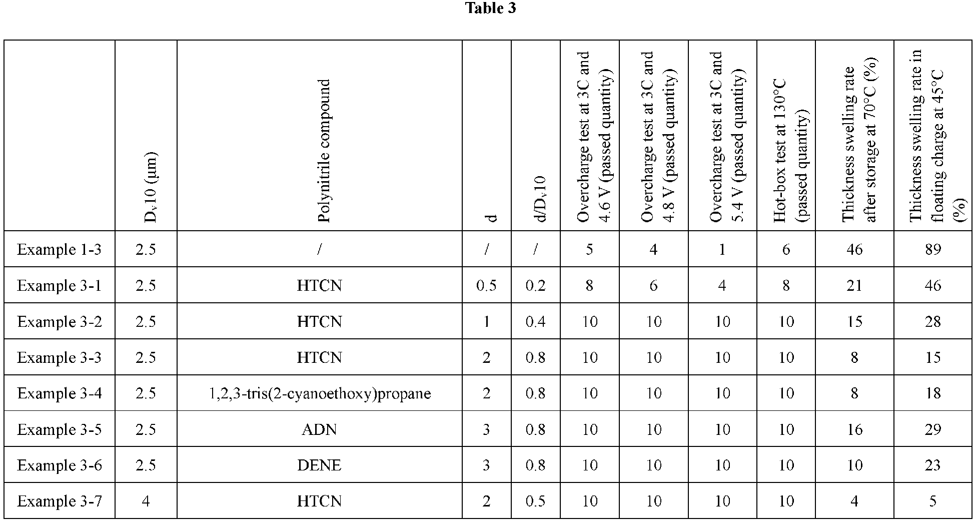

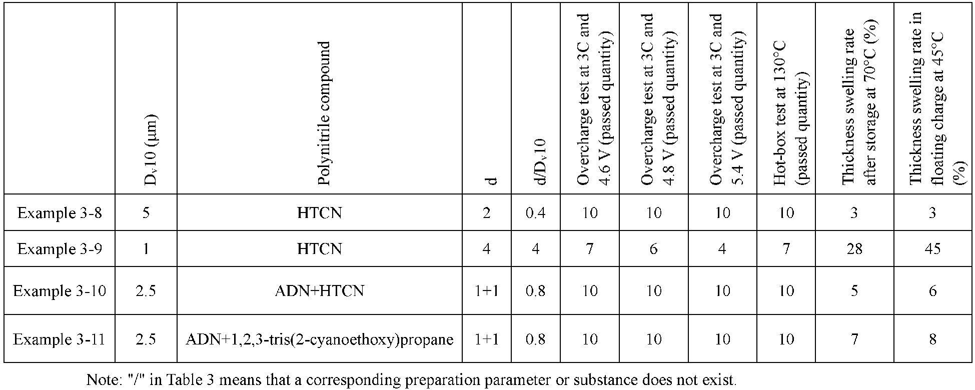

It can be learned from Example 1-3 and Example 3-1 to Example 3-11 that, addition of the polynitrile compound on the basis of the electrolyte having cyclic carbonate can further improve the cycling performance, high-temperature performance, and safety performance of the lithium-ion battery, that is, improve the comprehensive performance of the lithium-ion battery. The type and proportion of the polynitrile compound and the value of d/Dᵥ10 generally also affects the performance of the lithium-ion battery. It can be learned from Example 3-1 to Example 3-11 that, when the type and proportion of the polynitrile compound and the value of d/Dᵥ10 are within the ranges defined in this application, the lithium-ion battery obtained has good cycling performance, high-temperature performance, and safety performance, that is, good comprehensive performance.

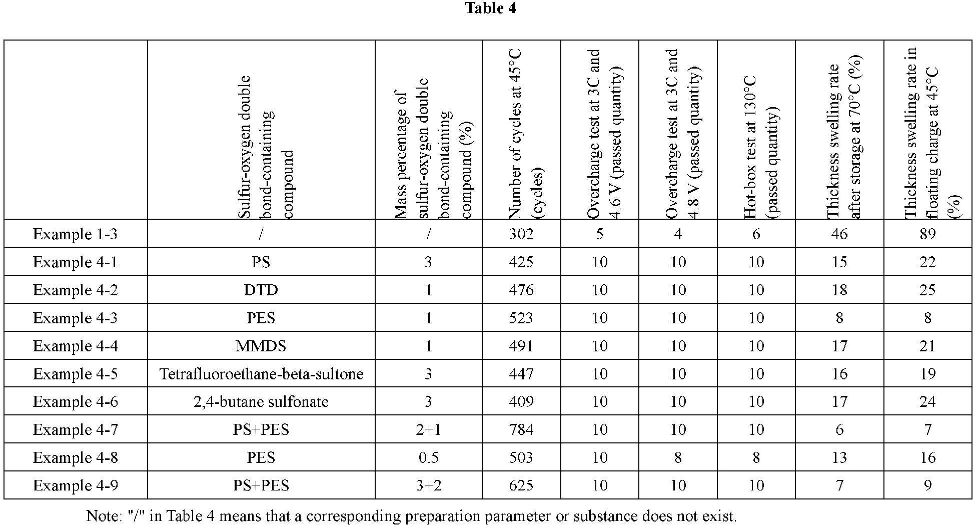

It can be learned from Example 1-3 and Example 4-1 to Example 4-9 that, addition of the sulfur-oxygen double bond-containing compound on the basis of the electrolyte having cyclic carbonate can further improve the cycling performance, high-temperature performance, and safety performance of the lithium-ion battery, that is, improve the comprehensive performance of the lithium-ion battery. The type and proportion of the sulfur-oxygen double bond-containing compound generally also affects the performance of the lithium-ion battery. It can be learned from Example 4-1 to Example 4-9 that, when the type and proportion of the sulfur-oxygen double bond-containing compound are within the ranges defined in this application, the lithium-ion battery obtained has good cycling performance, high-temperature performance, and safety performance, that is, good comprehensive performance.

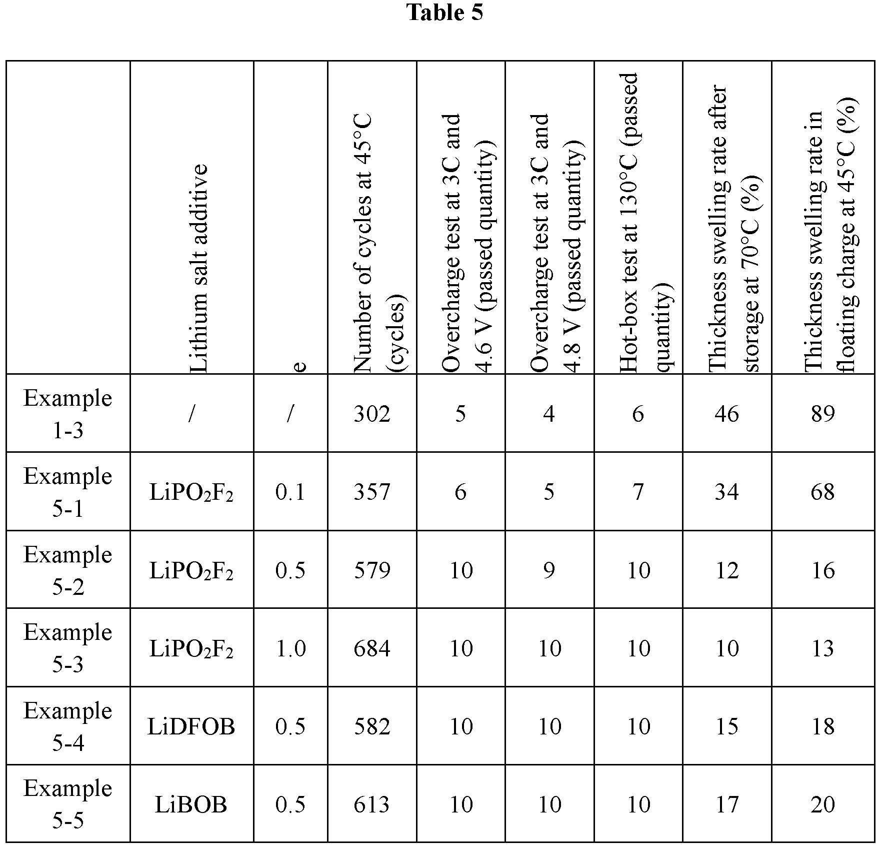

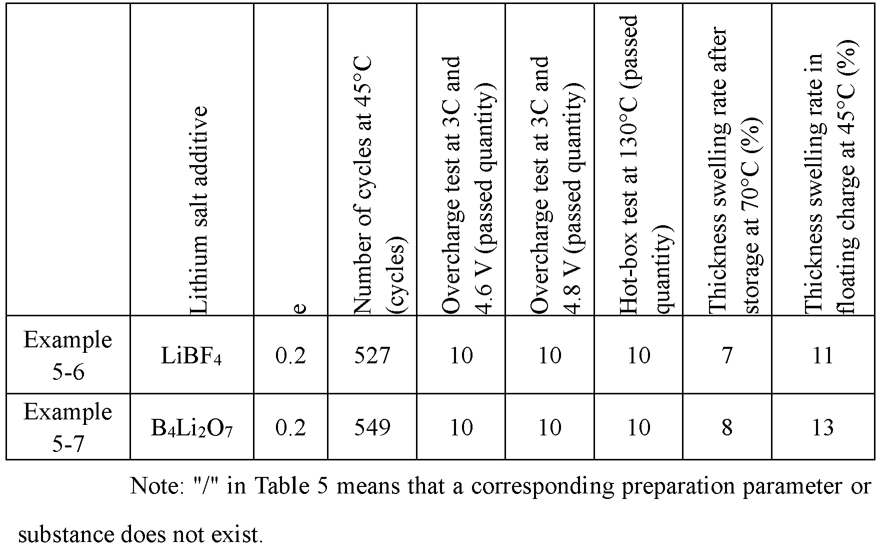

It can be learned from Example 1-3 and Example 5-1 to Example 5-7 that, addition of the lithium salt additive on the basis of the electrolyte having cyclic carbonate can further improve the cycling performance, high-temperature performance, and safety performance of the lithium-ion battery, that is, improve the comprehensive performance of the lithium-ion battery. The type and proportion of the lithium salt additive generally also affects the performance of the lithium-ion battery. It can be learned from Example 5-1 to Example 5-7 that, when the type and proportion of the lithium salt additive are within the ranges defined in this application, the lithium-ion battery obtained has good cycling performance, high-temperature performance, and safety performance, that is, good comprehensive performance.

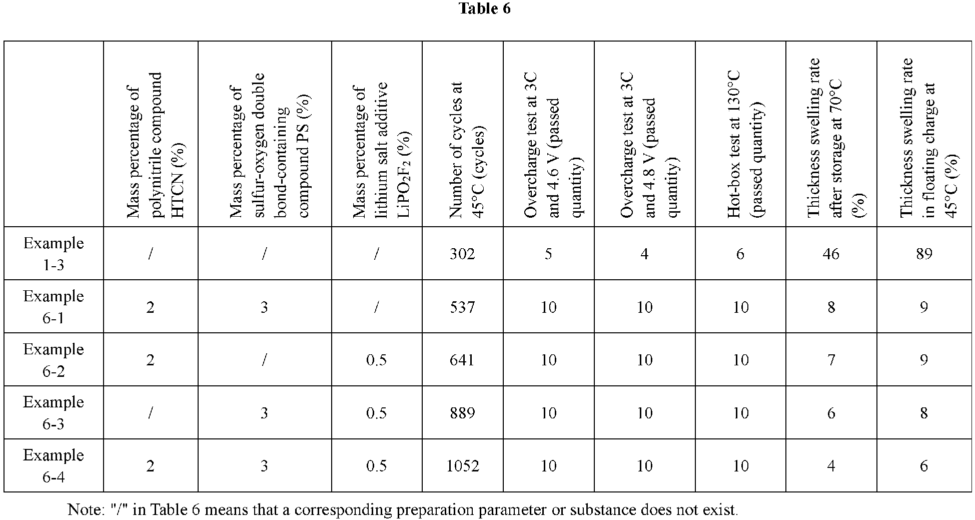

It can be learned from Example 1-3 and Example 6-1 to Example 6-4 that, addition of at least two of the polynitrile compound, sulfur-oxygen double bond-containing compound, or lithium salt additive on the basis of the electrolyte having cyclic carbonate can further improve the cycling performance, high-temperature performance, and safety performance of the lithium-ion battery, that is, improve the comprehensive performance of the lithium-ion battery. It can be learned from Example 6-1 to Example 6-4 that the polynitrile compound, sulfur-oxygen double bond-containing compound, and lithium salt additive have good additivity, so that the lithium-ion battery obtained has good cycling performance, high-temperature performance, and safety performance, that is, good comprehensive performance.

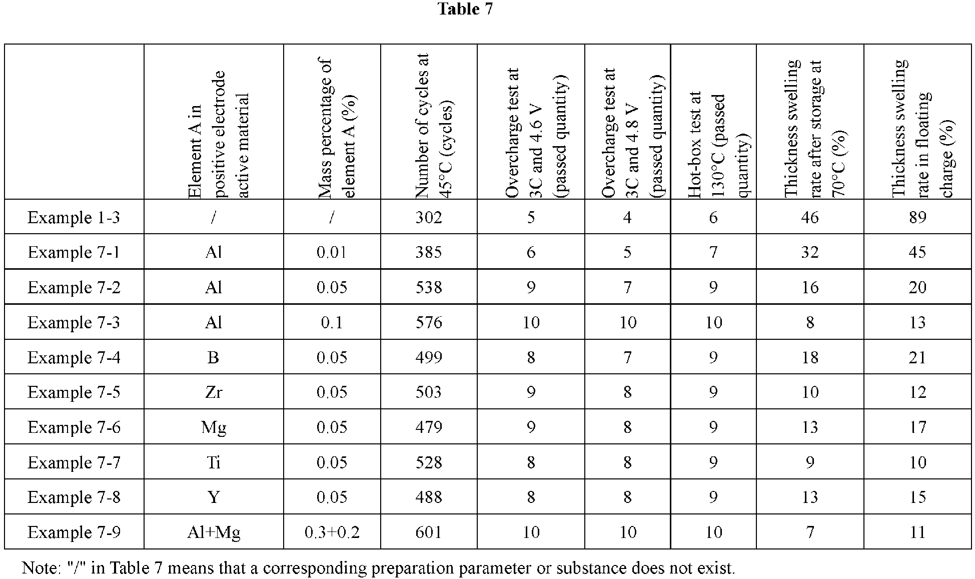

It can be learned from Example 1-3 and Example 7-1 to Example 7-9 that, the positive electrode active material containing element A can further improve the cycling performance, high-temperature performance, and safety performance of the lithium-ion battery, that is, improve the comprehensive performance of the lithium-ion battery. The type and proportion of element A generally also affects the performance of the lithium-ion battery. It can be learned from Example 7-1 to Example 7-9 that, when the type and proportion of element A are within the ranges defined in this application, the lithium-ion battery obtained has good cycling performance, high-temperature performance, and safety performance, that is, good comprehensive performance.

It should be noted that relational terms such as "first" and "second" are only adopted to distinguish one entity from another entity, and are not necessarily required or implied that there is any such actual relationship or order between these entities. In addition, terms "comprise", "include", or any of their variants are intended to cover a non-exclusive inclusion, so that a process, a method, an article, or a device that includes a series of elements not only includes those elements but also includes other elements that are not expressly listed, or further includes elements inherent to such process, method, article, or device.

The embodiments in this specification are described in a related manner. For a part that is the same or similar between different embodiments, reference may be made between the embodiments. Each embodiment focuses on differences from other embodiments.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus, comprising a positive electrode plate and an electrolyte, wherein
the positive electrode plate comprises a positive tab, and a working length b of the positive tab is 0.5 m to 3 m;
the electrolyte comprises cyclic carbonate, wherein a mass percentage of the cyclic carbonate is a% based on a mass of the electrolyte, and the cyclic carbonate comprises ethylene carbonate and/or propylene carbonate;
the electrochemical apparatus satisfies 13≤a/b≤110;
in a length direction of the positive electrode plate, the positive electrode plate comprises a first edge and a second edge opposite each other; and
the positive tab is provided in a quantity of one, wherein distance between the positive tab and the first edge is L1, distance between the positive tab and the second edge is L2, and the working length b is equal to the greater one of L1 and L2; or
the positive tab is provided in a quantity of two, wherein the positive tab close to the first edge is a first positive tab, the positive tab close to the second edge is a second positive tab, distance between the first positive tab and the first edge is L3, distance between the second positive tab and the second edge is L4, distance between the first positive tab and the second positive tab is L5, and the working length b is equal to the greatest one of L3, L4, and 0.5×L5.

2. The electrochemical apparatus according to claim 1, wherein 25≤a≤60, and 14.5≤a/b≤110.

3. The electrochemical apparatus according to claim 1, wherein 20≤a/b≤110.

4. The electrochemical apparatus according to claim 1, wherein the positive electrode plate comprises a positive electrode current collector and a positive electrode material layer provided on at least one surface of the positive electrode current collector, a coating mass of the positive electrode material layer is C g/1540.25 mm², and the electrochemical apparatus satisfies 50≤a/C≤300.

5. The electrochemical apparatus according to claim 4, wherein 0.2≤C≤0.5.

6. The electrochemical apparatus according to claim 1, wherein the electrolyte comprises a polynitrile compound, a mass percentage d% of the polynitrile compound is 0.5% to 5% based on the mass of the electrolyte, and the polynitrile compound comprises at least one of glutaronitrile, adiponitrile, succinonitrile, butenenitrile, 3-methyl butene nitrile, 1,2-bis(cyanoethoxy)ethane, 1,3,5-hexanetricarbonitrile, 1,3,6-hexanetricarbonitrile, 1,2,3-tris(2-cyanoethoxy)propane, or 1,3,4,6-hexanetetracarbonitrile.

7. The electrochemical apparatus according to claim 6, wherein the electrolyte comprises:
at least one of glutaronitrile, adiponitrile, succinonitrile, or 1,2-bis(cyanoethoxy)ethane; and
at least one of 1,3,5-hexanetricarbonitrile, 1,3,6-hexanetricarbonitrile, 1,2,3-tris(2-cyanoethoxy)propane, or 1,3,4,6-hexanetetracarbonitrile.

8. The electrochemical apparatus according to claim 6, wherein the positive electrode plate comprises a positive electrode active material, and a Dᵥ10 of the positive electrode active material and the mass percentage d% of the polynitrile compound satisfy: 0.2≤d/Dᵥ10≤4; and 1 µm≤Dᵥ10≤5 µm.

9. The electrochemical apparatus according to claim 1, wherein the electrolyte comprises a sulfur-oxygen double bond-containing compound, a mass percentage of the sulfur-oxygen double bond-containing compound is 0.01% to 8% based on the mass of the electrolyte, and the sulfur-oxygen double bond-containing compound comprises at least one of 1,3-propane sultone, ethylene sulfate, methylene methane disulfonate, propenyl-1,3-sultone, tetrafluoroethane-beta-sultone, 2,4-butane sultone, 1,4-butane sultone, 1,8-naphthosultone, or ethylene sulfite.

10. The electrochemical apparatus according to claim 1, wherein the electrolyte comprises a lithium salt additive, a mass percentage e% of the lithium salt additive is 0.01% to 2% based on the mass of the electrolyte, and the lithium salt additive comprises at least one of lithium difluorophosphate, lithium difluorooxalatoborate, lithium bisoxalatoborate, lithium tetrafluoroborate, lithium tetraborate, lithium borate, or lithium trifluoromethanesulfonate.

11. The electrochemical apparatus according to any one of claims 1 to 10, wherein the positive electrode plate comprises the positive electrode material layer, the positive electrode active material in the positive electrode material layer comprises element A, a mass percentage of element A is 0.001% to 2% based on a mass of the positive electrode active material, and element A comprises at least one of Al, B, Cr, Fe, Mg, Na, S, Ti, Zr, Y, Nb, Mo, W, F, or P.

12. An electronic apparatus, comprising the electrochemical apparatus according to any one of claims 1 to 11.
